# EUROPÄISCHE PATENTSCHRIFT

(11) **EP 1 578 702 B1**
(45) Veröffentlichungstag und Bekanntmachung des Hinweises auf die Patenterteilung: **16.08.2006**
(21) Anmeldenummer: 03789240.3
(22) Anmeldetag: 12.12.2003
(51) Int. Cl.: C04B 18/26, C04B 28/30

(54) **LEICHTBAUELEMENT**
LIGHT-WEIGHT CONSTRUCTIVE ELEMENT
ELEMENT DE CONSTRUCTION LEGER

(30) Priorität: 18.01.2003 DE 10301739
(43) Veröffentlichungstag der Anmeldung: 28.09.2005
(73) Patentinhaber: HERAKLITH AG, 9702 Ferndorf (AT)
(72) Erfinder: TSCHERNUTH, Christof, A-9500 Villach (AT)
(74) Vertreter: Becker, Thomas
(86) Internationale Anmeldenummer: PCT/EP2003/014112
(87) Internationale Veröffentlichungsnummer: WO 2004/065317

(56) Entgegenhaltungen:
- EP-A- 1 125 903
- EP-A- 1 249 547
- WO-A-99/13022
- DE-A- 19 541 626

## Beschreibung

Die Erfindung betrifft ein Leichtbauelement auf der Basis unregelmäßig verteilter Holzwolle-Fasern, die zumindest abschnittweise über ein Bindemittel verbunden sind.

Der Begriff "Leichtbauelement" bezeichnet jede Art eines geformten Erzeugnisses, beispielsweise einer Platte, mit einer relativ geringen Rohdichte (üblicherweise bis 350 kg/m³, nach DIN 1101 bis mindestens 570 kg/m³).

Holzwolle-Leichtbauelemente der vorgenannten Art sind unter dem Handelsnamen "HERAKLITH" seit langem bekannt. Die Holzwolle-Fasern weisen üblicherweise eine Länge von mehr als 8 cm, eine Breite von 1 bis 6 mm und eine Dicke von 0,2 bis 0,5 mm auf. Die einzelnen Holzfasern zeichnen sich durch eine erhebliche offene Porosität (sogenannte Zellen) aus. Die in unregelmäßiger Geometrie vorliegenden, spröden Holzwollefasern liegen innerhalb des Leichtbauelementes in Form eines offenporigen, dreidimensionalen Gerüstes unregelmäßig verteilt vor und sind zumindest abschnittweise untereinander über ein Bindemittel verbunden.

Neben ihrer konstruktiven Funktion sollen die Leichtbauelemente auch eine Brandschutzfunktion erfüllen. Die DIN 4102 unterteilt derartige Bauteile unter anderem in A - nicht brennbare Baustoffe - mit den Unterklassen A1 - Stoffe, die überhaupt nicht brennbar sind, und A2 - Stoffe, welche nur geringfügig brennbar sind -, den Brand aber nicht weiter aufrecht erhalten.

In der EP 1 125 903 A2 wird ein Leichtbauelement beschrieben, welches der Brandschutzklasse A2 zugeordnet werden kann. Dabei werden die vereinzelten Holzwollefasern in einem ersten Arbeitsgang in einer Flammschutzmittel-Lösung getränkt und anschließend mit einem Bindemittel beschichtet. Die Wirkung wird im Wesentlichen auf die Tränkung der noch unbehandelten Holzwollefasern mit dem Flammschutzmittel zurückgeführt.

In der EP 1 249 547 A2 wird ein Verfahren zur Herstellung eines Bauelementes der Brandschutzklasse A2 vorgeschlagen, bei dem Holzwollefasern wiederum in einem ersten Schritt mit einem flüssigen Flammschutzmittel imprägniert werden, anschließend eine Bindemittelbeschichtung erfolgt und schließlich das so vorbehandelte Leichtbauelement mit flüssigem Wasserglas geflutet wird.

Bauelemente der vorgenannten Art erfüllen zwar die Voraussetzungen der Brandschutzklasse A. Ihr mehrstufiges Herstellungsverfahren ist jedoch aufwendig.

Es besteht deshalb der Wunsch nach einem gattungsgemäßen Bauelement der Brandschutzklasse A2, welches rationeller produziert werden kann.

Bei der Suche nach einer Lösung dieses Problems wurden Versuche durchgeführt, bei denen ein konventionelles Holzwolle-Leichtbauelement (also ein Bauelement aus gebundenen Holzwolle-Fasern, ohne Flammschutzmittel) nachträglich durch Tauchen in eine Flammschutzmittel-Lösung imprägniert wurde. Mit anderen Worten: es wurde versucht, ein bekanntes Standardprodukt durch nachträgliche Imprägnierung zu einem Brandschutzelement zu veredeln.

Probleme ergaben sich dabei insoweit, als beobachtet wurde, dass sich auf der Oberfläche der Holzwollefasern und des Bindemittels salzartige Kristalle abschieden, die die Optik negativ veränderten. Die veränderte Oberfläche führte auch zu Problemen bei einer anschließenden Behandlung, beispielsweise bei einem Farbauftrag.

Völlig überraschend konnte in weiteren Versuchen festgestellt werden, dass sich diese Nachteile vermeiden lassen, wenn das Bauelement aus gebundenen Holzwolle-Fasern mit einem Material in flüssiger Aufbereitung getränkt wird, das neben mindestens einem Flammschutzmittel mindestens ein Zusatzmittel aufweist, das die Viskosität und/oder die Oberflächenspannung des flüssigen Flammschutzmittels reduziert. Die dabei erzielbaren Effekte sind noch nicht abschließend geklärt, können aber vorläufig wie folgt interpretiert werden: Durch eine Reduzierung der Viskosität und/oder der Oberflächenspannung des flüssigen Flammschutzmittels lässt sich das Flammschutzmittel leichter durch die bestehende, zumindest partielle Bindemittelbeschichtung der Holzwolle-Fasern in die Holzwolle-Fasern transportieren. Durch die spezielle Aufbereitung des Flammschutzmittels wird es möglich, die einzelnen Holzwolle-Fasern komplett und durchgehend zu imprägnieren, und zwar auch an dem bereits vorkonfektionierten Bauelement. Theoretisch lässt sich dieses Ziel auch durch eine entsprechend höhere "Verdünnung" der trockenen Wirksubstanz des Flammschutzmittels bei dessen flüssiger, beispielsweise wässriger Aufbereitung erreichen. Dies hat jedoch verschiedene Nachteile: zum einen reduziert sich der Anteil der für das Brandschutzverhalten wesentlichen Menge des Flammschutzmittels, das heißt, die Konzentration des Flammschutzmittels insbesondere in den Poren der Holzwolle-Fasern ist zwangsläufig geringer. Zum anderen bedeuten größere Flüssigkeitsmengen auch einen erhöhten anschließenden Trocknungsaufwand.

Durch die Verwendung eines Flammschutzmittels in Kombination mit dem genannten Zusatzmittel lässt sich in Abhängigkeit von den vorhandenen Holzwolle-Fasern und in Abhängigkeit von der Art und Menge des verwendeten Bindemittels ein optimales Imprägnierungsprofil einstellen.

Ein weiterer Vorteil besteht darin, dass als Zusatzmittel ein Mittel verwendet werden kann, das auch unter Temperaturbelastung nur einen geringen Massenverlust aufweist. Dies ist deshalb wichtig, weil der Massenverlust des gesamten Bauelementes maximal 50 % betragen darf, um die Anforderungen der Nicht-Brennbarkeit nach ISO 1182 zu erfüllen. Der Massenverlust (im Brandfall) resultiert im Wesentlichen aus den Verlusten an Holzwolle (bis zu 98 Gew.-%) und an Imprägnierungsmittel (bis zu 100 Gew.-%) sowie zumindest Anteilen des Bindemittels (aufgrund des Verlustes an Kristallwasser). Zum Beispiel Natriumhexametaphosphat (nachstehend NHMP genannt) weist bei 750° C einen Massenverlust von lediglich ca. 1,0 Gew.-% auf. Dieses Zusatzmittel erfüllt demnach eine doppelte Funktion: es wirkt zum einen viskositätserniedrigend auf das flüssige Flammschutzmittel bei der Imprägnierung (beziehungsweise setzt die Oberflächenspannung des Flammschutzmittels herab), erfüllt im Brandfall aber auch eine wesentliche Brandschutzfunktion.

Die Verwendung des flüssigen Flammschutzmittels in Kombination mit dem genannten Zusatzmittel führt schließlich noch zu folgendem weiteren positiven Effekt: Dadurch, dass das vorkonfektionierte Bauelement vollständig mit dem Imprägnierungsmaterial imprägniert werden kann und das Flammschutzmittel das Porenvolumen der Holzwolle-Fasern vollständig erreicht, entfällt das Problem der Auskristallisation des Flammschutzmittels an der Oberfläche der einzelnen Holzwolle-Fasern beziehungsweise des Bauelementes insgesamt.

Versuche haben gezeigt, dass bei entsprechender Dosierung des Imprägnierungsmaterials und entsprechender Behandlung des Leichtbauelementes eine Ansammlung der Wirksubstanz des Flammschutzmittels auf der Oberfläche der Holzwolle-Fasern beziehungsweise des Bindemittels weitestgehend vermieden werden kann. Dies gilt insbesondere dann, wenn das Imprägnierungsmaterial mit Hilfe einer Vakuum-Druck-Imprägnierung eingebracht wird.

Gegenüber den eingangs erwähnten Leichtbauelementen besitzen erfindungsgemäße Leichtbauelemente außerdem eine deutlich erhöhte Festigkeit.

Danach betrifft die Erfindung in ihrer allgemeinsten Ausführungsform ein Leichtbauelement auf der Basis unregelmäßig verteilter Holzwolle-Fasern, die zumindest abschnittweise über ein Bindemittel verbunden sind, wobei das Leichtbauelement mit einem Material imprägniert ist, das mindestens ein Flammschutzmittel und mindestens ein, die Viskosität und/oder die Oberflächenspannung des Flammschutzmittels in flüssiger Aufbereitung herabsetzendes Zusatzmittel aufweist.

Das Flammschutzmittel kann beispielsweise aus einem Phosphat bestehen, beispielsweise Ammoniumphosphat, Ammoniumpolyphosphat und/oder aus Ammoniumsulfat, Dipentaerythydrit, Alkalisulfat, Alkalicarbonat, Erdalkalicarbonat, Erdalkalisulfat, Harnstoff oder Mischungen daraus.

Der Anteil der trockenen Wirksubstanz des Flammschutzmittels, bezogen auf den trockenen Masseanteil der Summe an Holzwollefasern und Bindemittel, beträgt beispielsweise zwischen 4 und 45 Masse-%.

Der Anteil an Zusatzmittel liegt nach einer Ausführungsform zwischen 4 und 15 Masse-%, bezogen auf den trockenen Gesamt-Masseanteil an Holzwollefasern und Bindemittel.

Der Anteil an Zusatzmittel kann gegebenenfalls auf 7 bis 10 Masse-% eingegrenzt werden; auch der Flammschutzmittelanteil kann auf Bereiche zwischen 8 und 35 Masse-% eingeschränkt sein.

Als Zusatzmittel eignen sich beispielsweise Alkali- und/oder Erdalkaliphosphate, beispielsweise das bereits erwähnte NHMP. Ebenso können aber auch verschiedene Tenside Verwendung finden.

Das Flammschutzmittel wird gemeinsam mit dem Zusatzmittel verarbeitet, und zwar in flüssiger, beispielsweise wässriger Aufbereitung.

Als Bindemittel kann ein anorganisches Bindemittel wie ein magnesitisches Bindemittel, also ein Bindemittel auf Basis MgO eingesetzt werden.

Die Verfahrenstechnik zur Herstellung des Produktes ist beispielsweise wie folgt:

Die Holzwollefasern, beispielsweise in einer Länge von mehr als 8 cm, einer Breite bis 6 mm und einer Dicke bis 0,5 mm, werden unter Zumischung eines flüssigen oder viskosen Bindemittels, gegebenenfalls auch eines Bindemittelschaums, in üblicher Weise zu einem Holzwolle-Leichtbauelement aufbereitet, welches anschließend bis zur Erzielung mindestens einer Grünstandsfestigkeit gelagert wird.

Anschließend wird das so hergestellte Leichtbauelement in einem Vakuum-Druckverfahren mit einer wässrigen Lösung aus Flammschutzmittel und Zusatzmittel imprägniert. Die Anteile an Wirksubstanz wurden bereits genannt. Die Viskosität einer solchen Lösung bei 20° C liegt beispielsweise in der Größenordnung von 0,01 P (dPas).

Das Imprägnierungsmittel durchdringt dabei die Holzwolle-Fasern, soweit diese freiliegen; ansonsten wird das Imprägnierungsmittel aber auch durch die Bindemittel-Phase gesaugt, die insoweit mit imprägniert wird. Auch dieses stellt ein wesentliches Unterscheidungsmerkmal zum Stand der Technik dar.

Anschließend erfolgt eine weitere Lagerung bis zur endgültigen Trocknung und Aushärtung des Produktes.

Der Anteil des Bindemittels, bezogen auf die unbehandelten Holzwolle-Fasern, liegt beispielsweise im Bereich 10 bis 40 Gew.-%, nach einer Ausführungsform im Bereich zwischen 15 und 30 Gew.-%.

Der Anteil ist unter anderem abhängig von der gewünschten Festigkeitsklasse sowie dem Anteil der offenen Poren (Freiräume zwischen den Holzwollefasern).

Dabei beziehen sich die vorgenannten Mengenangaben für das Bindemittel auf die Holzwollefasern im getrockneten Zustand.

Weitere Merkmale der Erfindung sind Merkmale der Unteransprüche sowie der sonstigen Anmeldungsunterlagen.

## Patentansprüche

1. Leichtbauelement auf der Basis unregelmäßig verteilter Holzwolle-Fasern, die zumindest abschnittweise über ein Bindemittel verbunden sind, wobei das Leichtbauelement mit einem Material imprägniert ist, das mindestens ein Flammschutzmittel und mindestens ein, die Viskosität und/oder die Oberflächenspannung des Flammschutzmittels in flüssiger Aufbereitung herabsetzendes Zusatzmittel aus Alkali- und/oder Erdalkaliphosphat aufweist.

2. Leichtbauelement nach Anspruch 1, dessen Anteil an trockener Wirksubstanz des Flammschutzmittels, bezogen auf den trockenen Masseanteil des Leichtbauelements, 4 bis 45 Masse-% beträgt.

3. Leichtbauelement nach Anspruch 1, dessen Anteil an trockener Wirksubstanz des Flammschutzmittels, bezogen auf den trockenen Masseanteil des Leichtbauelements, 7 bis 40 Masse-% beträgt.

4. Leichtbauelement nach Anspruch 1, dessen Anteil an trockener Wirksubstanz des Zusatzmittels, bezogen auf den trockenen Masseanteil des Leichtbauelements, 4 bis 15 Masse-% beträgt.

5. Leichtbauelement nach Anspruch 1, dessen Anteil an trockener Wirksubstanz des Zusatzmittels, bezogen auf den trockenen Masseanteil des Leichtbauelements, 5 bis 10 Masse-% beträgt.

6. Leichtbauelement nach Anspruch 1, dessen Flammschutzmittel aus Ammoniumphosphat, Ammoniumpolyphosphat, Alkalicarbonat, Erdalkalicarbonat, Alkalisulfat, Erdalkalisulfat, Harnstoff, Dipentaerythydrit oder Mischungen daraus besteht.

7. Leichtbauelement nach Anspruch 1, dessen Zusatzmittel aus Natriumhexametaphosphat besteht.

8. Leichtbauelement nach Anspruch 1, dessen Bindemittel ein anorganisches Bindemittel ist.

9. Leichtbauelement nach Anspruch 1, dessen Bindemittel ein magnesitisches Bindemittel ist.

10. Leichtbauelement nach Anspruch 1, dessen Holzwolle-Fasern eine Länge von größer 8 cm, eine Breite bis 6 mm und eine Dicke bis 0,5 mm aufweisen.

11. Leichtbauelement nach Anspruch 1, dessen Holzwolle-Fasern auf ihrer Oberfläche weitestgehend frei von Imprägnierungsmaterial sind.

## Claims

1. A light construction element based on irregularly distributed wood wool fibers, which are at least partially bonded via a binder,
wherein the light construction element is impregnated with a material which comprises at least one flame retardant and at least one additive made of alkaline phosphate and/or alkaline earth phosphate that reduces the viscosity and/or the surface tension of the flame retardant in liquid preparation.

2. The light construction element according to Claim 1, whose proportion of dry active substance of the flame retardant, in relation to the dry mass proportion of the light construction element, is 4 to 45 mass-percent.

3. The light construction element according to Claim 1, whose proportion of dry active substance of the flame retardant, in relation to the dry mass proportion of the light construction element, is 7 to 40 mass-percent.

4. The light construction element according to Claim 1, whose proportion of dry active substance of the additive, in relation to the dry mass proportion of the light construction element, is 4 to 15 mass-percent.

5. The light construction element according to Claim 1, whose proportion of dry active substance of the additive, in relation to the dry mass proportion of the light construction element, is 5 to 10 mass-percent.

6. The light construction element according to Claim 1, whose flame retardant comprises ammonium phosphate, ammonium polyphosphate, alkaline carbonate, alkaline earth carbonate, alkaline sulfate, alkaline earth sulfate, urea, dipentaerythritol, or mixtures thereof.

7. The light construction element according to Claim 1, whose additive comprises sodium hexametaphosphate.

8. The light construction element according to Claim 1, whose binder is an inorganic binder.

9. The light construction element according to Claim 1, whose binder is a magnesitic binder.

10. The light construction element according to Claim 1, whose wood wool fibers have a length of greater than 8 cm, a width up to 6 mm, and a thickness up to 0.5 mm.

11. The light construction element according to Claim 1, whose wood wool fibers are as free as possible of impregnation material on their surface.

## Revendications

1. Élément pour construction légère à base de fibres de laine de bois réparties irrégulièrement, lesquelles sont liées entre elles au moins par zones au moyen d'un liant, l'élément pour construction légère étant imprégné d'un matériau qui comporte au moins un agent ignifuge et au moins un adjuvant, à base de phosphate alcalin et/ou de phosphate alcalinoterreux, qui diminue la viscosité et/ou la tension superficielle de l'agent ignifuge dans la préparation liquide.

2. Élément pour construction légère selon la revendication 1, dans lequel la quantité de substance active sèche de l'agent ignifuge est de l'ordre de 4 à 45 % en masse par rapport à la masse sèche de l'élément pour construction légère.

3. Élément pour construction légère selon la revendication 1, dans lequel la quantité de substance active sèche de l'agent ignifuge est de l'ordre de 7 à 40 % en masse par rapport à la masse sèche de l'élément pour construction légère.

4. Élément pour construction légère selon la revendication 1, dans lequel la quantité de substance active sèche de l'adjuvant est de l'ordre de 4 à 15 % en masse par rapport à la masse sèche de l'élément pour construction légère.

5. Élément pour construction légère selon la revendication 1, dans lequel la quantité de substance active sèche de l'adjuvant est de l'ordre de 5 à 10 % en masse par rapport à la masse sèche de l'élément pour construction légère.

6. Élément pour construction légère selon la revendication 1, dans lequel l'agent ignifuge est constitué de phosphate d'ammonium, de polyphosphate d'ammonium, de carbonate alcalin, de carbonate alcalinoterreux, de sulfate alcalin, de sulfate alcalinoterreux, d'urée, de dipentaerythydrite ou de mélanges de ceux-ci.

7. Élément pour construction légère selon la revendication 1, dans lequel l'adjuvant est constitué d'hexamétaphosphate de sodium.

8. Élément pour construction légère selon la revendication 1, dans lequel le liant est un liant anorganique.

9. Élément pour construction légère selon la revendication 1, dans lequel le liant est un liant magnésitique.

10. Élément pour construction légère selon la revendication 1, dans lequel les fibres de laine de bois ont une longueur supérieure à 8 cm, une largeur jusqu'à 6 mm, et une épaisseur jusqu'à 0,5 mm.

11. Élément pour construction légère selon la revendication 1, dans lequel les fibres de laine de bois ont une surface qui, sur une très grande partie, est exempte du matériau d'imprégnation.
